Europäisches Patentamt

European Patent Office

Office européen des brevets

(11) Veröffentlichungsnummer: **0 490 059 A1**

# EUROPÄISCHE PATENTANMELDUNG

(21) Anmeldenummer: **91117705.3**

(51) Int. Cl.5: **C03B 37/018**

(22) Anmeldetag: **17.10.91**

(30) Priorität: **12.12.90 DE 4039578**

(43) Veröffentlichungstag der Anmeldung:
**17.06.92 Patentblatt 92/25**

(84) Benannte Vertragsstaaten:
**CH DE DK FR GB IT LI NL**

(71) Anmelder: **kabelmetal electro GmbH**
**Kabelkamp 20 Postfach 260**
**W-3000 Hannover 1(DE)**

(72) Erfinder: **Keim, Norbert, Dipl.-Ing.**
**Mergenthalerstrasse 21**
**W-7120 Bietigheim-Biss.(DE)**
Erfinder: **Görner, Klaus, Dr. Ing.**
**Dürnauerweg 32**
**W-7000 Stuttgart 70(DE)**
Erfinder: **Käss, Martin, Dipl.-Ing.**
**Ludwigstrasse 87 B**
**W-7000 Stuttgart 1(DE)**

(54) **Anordnung zur Herstellung einer Vorform für Glasfaser-Lichtwellenleiter.**

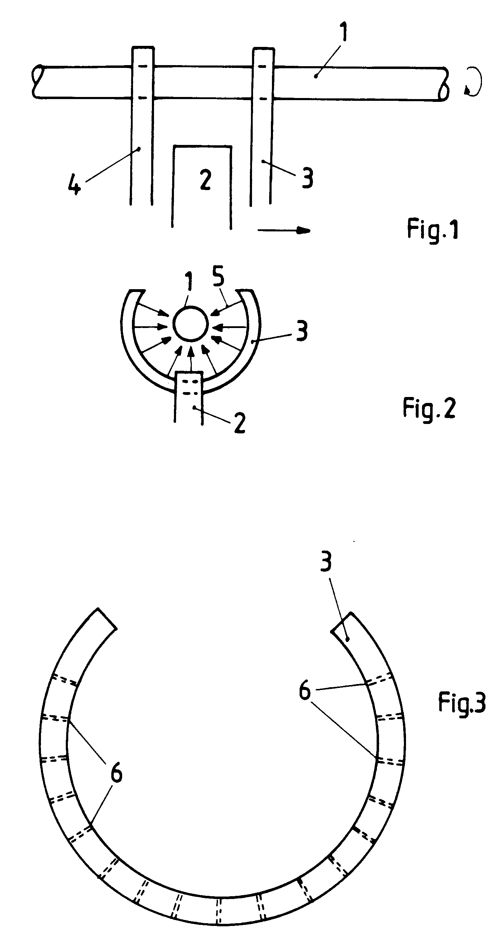

(57) Zur Herstellung einer Vorform für Glasfaser-Lichtwellenleiter mit einem Kern und einem ein- oder mehrschichtigen Mantel durch Innenbeschichtung eines Glasrohres (1) mit dem Kernglasmaterial aus der Dampfphase und anschließendes Kollabieren des Glasrohres, sind die Temperaturprofile zum Beschichten und/oder Kollabieren durch ein- oder beidseitig von einem Gasbrenner (2) in Achsrichtung des Glasrohres angeordnete Zusatzdüsen (3,4) beeinflußbar (Fig. 1). Dabei sind die Zusatzdüsen (3,4) konzentrisch zum Glasrohr (1) auf einem sich über 180° und mehr erstreckenden Kreissegment angeordnet (Fig. 2) und der Abstand der einzelnen Zusatzdüsen längs des Kreissegmentes voneinander beträgt 5° - 25°, vorzugsweise 10° - 20°.

Fig.1

Fig.2

EP 0 490 059 A1

Die vorliegende Erfindung betrifft eine Anordnung zur Herstellung einer Vorform für Glasfaser-Lichtwellenleiter mit einem Kern und einem ein- oder mehrschichtigen Mantel durch Innenbeschichtung eines Glasrohres mit dem Kernglasmaterial aus der Dampfphase und anschließendes Kollabieren des Glasrohres, wobei die Temperaturprofile zum Beschichten und/oder Kollabieren durch ein- oder beidseitig von einem Gasbrenner in Achsrichtung des Glasrohres angeordnete Zusatzdüsen beeinflußbar sind.

Solche Anordnungen mit Gasbrenner und/oder beidseitig vom Gasbrenner angeordneten Zusatzdüsen werden z. B. entsprechend einem früheren Vorschlag für das bei der Herstellung optischer Fasern verwendete Innenbeschichtungsverfahren, auch als MCVD-Verfahren bekannt, eingesetzt. Hierbei wird eine geeignete Wärmequelle, das ist in der Regel ein Gasbrenner, innerhalb der Beschichtungs- bwz. Kollabieranlage ein oder mehrere Male in Längsrichtung an einem Glasrohr entlang geführt, wobei die Beschichtung mit der entsprechenden Temperaturbehandlung in der Regel nur jeweils in einer Richtung erfolgt. Zur Beschichtung der inneren Oberfläche des Glasrohres werden Metallhalogenide, z. B. reine oder dotierte Siliciumhalogenide, bei hohen Temperaturen in die entsprechenden Oxide umgesetzt, wobei die chemische Umsetzung sowie der Abscheidungsprozeß an der Rohrinnenwand praktisch gleichzeitig ablaufen.

Das Bestreben, die Fertigungsgeschwindigkeit bei der Glasfaserfertigung zu erhöhen und damit zu einer Leistungssteigerung ohne Qualitätseinbußen am fertigen Produkt zu kommen, waren Anlaß, die Brennerleistugnen zu erhöhen, um hierdurch zu kürzeren Kollabierzeiten zu kommen. Eine Leistungssteigerung konnte jedoch in der Praxis nicht erreicht werden, weil die erhaltene Produktqualität zu wünschen übrig läßt. Denn eine Steigerung der Brennerleistung mit der heute üblichen Brennereinstellung führt dazu, daß sich die zu kollabierenden Rohre verbiegen, verwerfen oder verdrehen und daher nicht mehr beim Fertigungsprozeß stabil in der Rotationsachse gehalten werden können.

Um hier weiter zu kommen, d. h. die Kollabierzeit zu verringern, ohne daß die Produktqualität in Frage gestellt ist, hat man deshalb vorgeschlagen, die Temperaturbehandlung zum Kollabieren längs des Glasrohres entsprechend einem bestimmten Temperaturprofil durchzuführen. Ein solches Temperaturprofil ist bestimmt durch einen längs des behandelten Glasrohrabschnittes oberen Bereich maximaler Glastemperatur und einem Bereich Glaserweichungstemperatur, wobei der Bereich maximaler Glastemperatur ein weitgehend gleichmäßiges Temperaturniveau aufweist mit einer Breite längs des Rohrabschnittes, die der Breite des Bereiches Glaserweichungstemperatur angenähert ist. Um dieses Temperaturprofil auch reproduzierbar sicherzustellen, hat man bereits gezielte mechanische und deshalb durchflußmäßige Optimierungen des Brenners vorgenommen, wobei es insbesondere bei voller Brennerleistung darauf ankam, die Randbereiche des Strömungsverlaufes zu beeinflussen. So hat man die Brennergase von der Oberfläche des Glasrohres im Randbereich abgelenkt und damit der Erwärmung in dem jeweiligen Rohrabschnitt entzogen.

Ein definierbares und reproduzierbares Temperaturprofil ist aber auch dann anzustreben, wenn es nicht um das Kollabieren des innen beschichteten Glasrohres, sondern um die bereits beschriebene Innenbeschichtung selbst geht. Denn die Form des Temperaturprofils ist einmal entscheidend für die chemische Reaktion der Gase und den Niederschlag der Oxide, aber auch entscheidend für das Aufschmelzen der niedergeschlagenen oder sonstwie aufgebrachten Materialteilchen. Um auch hierbei die Qualität des Endproduktes zu verbessern und höhere Fertigungsgeschwindigkeiten zu erzielen, hat man bereits die Temperaturbehandlung zum Beschichten längs des Glasrohres entsprechend einem Temperaturprofil mit breiter Temperaturverteilung durchgeführt, wobei das Temperaturprofil längs des behandelten Glasrohrabschnittes durch einen oberen Bereich maximaler Reaktionstemperatur sowie darunterliegende breitere Bereiche Sintertemperatur und Vorwärmung der gasförmigen Chemikalien bestimmt wird. Die einzelnen Bereiche sind in ihrer Breite zueinander veränderbar. Der Bereich maximaler Reaktionstemperatur weist dabei ein weitgehend gleichmäßiges Temperaturniveau auf. Auf der Seite des Temperaturprofils, auf der die reagierenden Partikel aus dem Bereich des Gasbrenners austreten, wird ein möglichst steiler Temperaturgradient benötigt, der fur eine hohe thermophoretische Wirkung verantwortlich ist. Aus diesem Grunde hat man auch hier bereits in Achsrichtung des Rohres und in Richtung des verfahrbaren Gasbrenners vor diesem Zusatzdüsen angeordnet, die das Temperaturprofil zur Behandlung des Glasrohres für einen steilen Temperaturgradienten in diesem Bereich begrenzen.

Ausgehend von diesen Vorschlägen über die Herstellung von Glasvorformen für die Herstellung von Glasfaser-Lichtwellenleitern liegt der Erfindung die Aufgabe zugrunde, den Temperaturverlauf zum Beschichten und Kollabieren des Glasrohres in der Wirksamkeit weiter zu verbessern, d. h. für eine noch schärfere Abgrenzung des Temperaturprofils zu sorgen.

Zur Lösung dieser Aufgabe sind die ein- oder beidseitig vom Gasbrenner angeordneten Zusatzdüsen konzentrisch zum Glasrohr auf einem sich über 180° und mehr erstreckenden Kreissegment angeordnet, und der Abstand der einzelnen Zusatzdüsen längs des Kreissegmentes voneinander beträgt 5° - 25°, vorzugsweise 10° - 20°. Diese Maßnahme führt zu einer Beeinflussung der Randbereiche der Brennergase auch im oberen Bereich des Glasrohres, wenn, wie die Regel, die Brenner unterhalb des umlaufenden Glasrohres in Achsrichtung verfahrbar angeordnet sind. Die durch die Abstandswahl der Zusatzdüsen untereinander gegenüber bekannten Vorrichtungen wesentlich verringerte Düsenzahl bewirkt bei gleichem Massenstrom wesentlich höhere Gasaustrittsgeschwindigkeiten aus den Düsenöffnungen und damit zu einer schärferen Strahlenbündelung. Diese Strahlen sind dann nicht mehr durch die Brennerflamme selbst ablenkbar, sie greifen aber auch nicht in diese ein, so daß Störungen im Flammenprofil vermieden sind. Eine solche Störung ergibt sich bei bekannten Brennertypen beispielsweise dadurch, daß die mehr oder weniger in das Flammenprofil eingreifenden Gase der Zusatzdüsen die Flammengase verdünnen und damit die Temperatur in der Temperaturprofilflanke herabsetzen. Diese Gefahr besteht bei der Erfindung nicht, die in der Anzahl geringeren jedoch wegen der höheren Masseaustrittsgeschwindigkeiten scharf abgegrenzten Gasströme der Zusatzdüsen führen zwar, wie beabsichtigt, zu einer schärferen Abgrenzung der seitlichen Bereiche der Brennergase, sie lassen jedoch das restliche Flammenprofil im Sinne höherer Temperatur in der Temperaturprofilflanke unbeeinflußt.

In Durchführung des Erfindungsgedankens hat es sich als zweckmäßig erwiesen, wenn die Zusatzdüsen Teil eines sich über 180° und mehr erstreckenden Düsenringes sind. Dieser Düsenring, der vorteilhaft aus metallischen Werkstoffen, beispielsweise Edelstahl, bestehen kann, ist aus konstruktiven Gründen leicht in die Brenneranordnung zu integrieren, Herstellung und Wartung sind vereinfacht.

Letzteres gilt insbesondere für den Fall, daß in Durchführung der Erfindung die Zusatzdüsen als Bohrungen im Düsenring mit rundem Querschnitt ausgebildet sind. Diese Bohrungen, die im Austrittsbereich im Düsenring durch Materialauswahl und/oder -bearbeitung mit scharfen Abreißkanten ausgeführt sein können, sind mit geringen Querschnittsflächen auszubilden, so daß auch hierdurch hohe Strömungsgeschwindigkeiten und damit schärfere Abgrenzungen der einzelnen Zusatzströme erreicht werden. Als besonders vorteilhaft hat es sich in diesem Zusammenhang erwiesen, wenn die Querschnittsfläche der einzelnen, im Düsenring angeordneten Bohrungen jeder Zusatzdüse 0,08 - 0,25, vorzugsweise 0,10 - 0,18 mm$^2$ beträgt.

Zur Erzielung größerer Temperaturgradienten durch Abschirmung der gesamten Vorform mittels der erfindungsgemäßen Zusatzdüsen trägt auch dazu bei, daß der Abstand jeder Zusatzdüse von der Achse des Glasrohres 4,0 - 6,5, vorzugsweise 5,0 - 6,0 cm beträgt.

Die Erfindung sei anhand des in den Figuren 1 und 3 dargestellten Ausführungsbeispieles näher erläutert.

Die Fig. 1 zeigt in schematischer Darstellung den Ablauf eines Kollabierprozesses, bei dem das innen beschichtete Quarzglasrohr 1, beidseitig in nicht dargestellten sogenannten Backenfuttern eingespannt, drehbar gelagert ist und umläuft, während der hier als Wärmequelle dienende Gasbrenner 2 in Pfeilrichtung hin- und wieder zurückbewegt wird, um das Kollabieren des Rohres 1, d. h. das Schrumpfen in die endgültige Vorform, zu gewährleisten. Das Kollabieren des Glasrohres erfolgt unter dem Einfluß des Gasbrenners 2 abschnittsweise, wobei die für diese Zwecke benötigte und vom Gasbrenner erzeugte Temperatur, wie bereits vorgeschlagen, ein Profil aufweist, das einem rechteckförmigen Profil angenähert ist. Voraussetzung hierfür ist u. a., daß das durch den Brenner 2 erzeugte Flammenprofil auf das zu behandelnde Glasrohr 1 ausgerichtet ist und Querströmungen, die unvermeidliche, vom Flammenprofil her gesehen unscharfe Randbereiche bilden, auf ein Minimum beschränkt werden. Hierzu dienen vor und hinter dem Gasbrenner 2 und mit diesem verfahrbar angeordnete Zusatzdüsen 3 und 4, deren als Barriere wirkende Gasströme für eine Umlenkung der vom Brenner 2 erzeugte Nebenströme dienen.

Während bekannte Zusatzdüsen tatsächlich eine gewisse Begradigung des vom Gasbrenner 2 erzeugten Flammenprofils in den Randbereichen bewirken, reichen diese Zusatzdüsen nicht aus, bei einem bereits weitgehend scharf abgegrenzten Temperaturprofil für eine weitere Erhöhung der Temperaturgradienten in den Flanken dieses Profils, insbesondere unter Beibehaltung der Breite der heißen Zone zu sorgen und diese zusätzliche Korrektur auch reproduzierbar zu gestalten.

Um das zu erreichen, sieht die Erfindung, wie insbesondere aus den Fig. 2 und 3 ersichtlich, die Ausbildung von Zusatzdüsen vor, die um das Rohr 1 herum in konzentrischer Anordnung weitergeführt sind, so daß der beeinflußte Randbereich des Brennerflammenprofils wirksamer als bisher möglich beeinflußt wird.

Im Ausführungsbeispiel beträgt der Winkel des das Glasrohr 1 umschließenden Kreissegmentes 270°, die Einzelstrahlen 5 der Zusatzdüsen wirken aufgrund der hohen Einzelimpulse wie ein aerodynamischer Vorhang. Wie schon aus der Fig. 2 ersichtlich, ist die Anzahl der Einzeldüsen recht klein gewählt, damit wird der Gesamtdurchsatz des Zusatzgases wesentlich verringert.

Die Fig. 3 zeigt einen in den Fig. 1 und 2 nur schematisch dargestellten Düsenring 3 oder 4 in der konstruktiven Ausgestaltung, d. h. mit am Umfang verteilten Durchgangsbohrungen 6 für den Zusatzgasstrom, wobei die Anzahl der Düsen längs des Umfanges durch den verhältnismäßig großen Abstand der Bohrungen untereinander bestimmt wird. Dieser Abstand, in Winkelgraden z. B. gemessen, beträgt in der dargestellten Form bezogen auf den zwischen jeweils zwei Bohrungen 6 eingeschlossenen Winkel 14°.

Der Düsenring 3 oder 4, der in einer entsprechenden Halterung zusammen mit dem Brenner 1 in Pfeilrichtung verschiebbar ist, ist zweckmäßig aus temperaturbeständigen und zunderfreien metallischen Werkstoffen hergestellt, beispielsweise aus Edelstahl. Hierdurch bedingt und vor allem durch die im Querschnitt runde Form der Bohrungen 6 sind hohe Einzelimpulse des jeweiligen Gasstrahles 5 erreichbar, bei geringem Gesamtdurchsatz. Das bedeutet, daß die von den Düsenringen gebildeten aerodynamischen Barrieren praktisch rückwirkungsfrei parallel zu den Brennern betrieben werden können. Die Plateaubreite und die Höhe im gewünschten Temperaturprofil wird durch diese Barriere nicht beeinfußt, beeinflußt aber werden die Flanken der Temperaturverteilung, die Erfindung führt nämlich zu einem höheren Temperaturgradienten im Flankenbereich. Auf diese Weise ist es z. B. möglich, mit einem breiteren Temperaturplateau bei gleichzeitiger Einhaltung der Stabilitätsbreite das innen beschichtete Glasrohr 1 zu kollabieren.

Abweichend von dem dargestellten Ausführungsbeispiel für das Kollabieren des beschichteten Glasrohres ist die Erfindung in gleicher Weise für die Innenbeschichtung einsetzbar, wenn es darum geht, einen steilen Temperaturgradienten dann sicherzustellen, wenn im Verfahrensablauf die reagierenden Partikel aus dem Einflußbereich des Brenners austreten (wirksamere Thermophorese).

## Patentansprüche

1. Anordnung zur Herstellung einer Vorform für Glasfaser-Lichtwellenleiter mit einem Kern und einem ein- oder mehrschichtigen Mantel durch Innenbeschichtung eines Glasrohres mit dem Kernglasmaterial aus der Dampfphase und anschließendes Kollabieren des Glasrohres, wobei die Temperaturprofile zum Beschichten und/oder Kollabieren durch ein- oder beidseitig von einem Gasbrenner in Achsrichtung des Glasrohres angeordnete Zusatzdüsen beeinflußbar sind, dadurch gekennzeichnet, daß die Zusatzdüsen konzentrisch zum Glasrohr auf einem sich über 180° und mehr erstreckenden Kreissegment angeordnet sind und der Abstand der einzelnen Zusatzdüsen längs des Kreissegmentes voneinander 5° - 25°, vorzugsweise 10° -20° beträgt.

2. Anordnung nach Anspruch 1, dadurch gekennzeichnet daß die Zusatzdüsen Teil eines sich über 180° und mehr erstreckenden Düsenringes sind.

3. Anordnung nach Anspruch 2, dadurch gekennzeichnet, daß der Düsenring aus metallischen Werkstoffen besteht.

4. Anordnung nach Anspruch 2 oder 3, dadurch gekennzeichnet, daß die Zusatzdüsen als Bohrungen im Düsenring mit rundem Querschnitt ausgebildet sind.

5. Anordnung nach Anspruch 4, dadurch gekennzeichnet, daß die Querschnittsfläche der Bohrungen jeder Zusatzdüse 0,08 bis 0,25, vorzugsweise 0,10 bis 0,18 mm$^2$ beträgt.

6. Anordnung nach Anspruch 1 oder einem der folgenden, dadurch gekennzeichnet, daß der Abstand jeder Zusatzdüse von der Achse des Glasrohres 4,0 - 6,5, vorzugsweise 5,0 - 6,0 cm beträgt.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 187 230 (GTE LABORATORIES INC.) <br> * Seite 4, Zeilen 19-25; Seite 5, Zeilen 4-15; Seite 8,Zeile 33 - Seite 9,Zeile 22; Seite 10, Zeilen 10-11; Figuren 1,3B,5A,5B * <br> --- | 1-5 | C03B37/018 |
| X | WO-A-8 002 020 (WESTERN ELECTRIC CO.INC.) <br> * Seite 1, Zeilen 4-10; Seite 11, Zeilen 1-18; Seite 14,Zeile 32 - Seite 15,Zeile 6; Seite 17, Zeilen 1-5; Figuren 8,9 * <br> --- | 1-4 | |
| A | FR-A-2 512 520 (WESTERN ELECTRIC CO.INC.) <br> * Seite 7, Zeilen 8-13; Figur 1 * <br> --- | 1 | |
| A | PATENT ABSTRACTS OF JAPAN <br> vol. 4, no. 38 (C-4)(520) 27. März 1980 <br> & JP-A-55 010 439 ( FURUKAWA DENKI KOGYO KK ) 24. Januar 1980 <br> * Zusammenfassung * <br> --- | 1 | |
| A | PATENT ABSTRACTS OF JAPAN <br> vol. 9, no. 36 (C-266)(1759) 15. Februar 1985 <br> & JP-A-59 182 243 ( FUJITSU KK ) 17. Oktober 1984 <br> * Zusammenfassung * <br> ----- | | RECHERCHIERTE SACHGEBIETE (Int. Cl.5 ) <br><br> C03B |

Der vorliegende Recherchenbericht wurde für alle Patentansprüche erstellt

| Recherchenort | Abschlußdatum der Recherche | Prüfer |
|---|---|---|
| DEN HAAG | 03 MAERZ 1992 | STROUD J.G. |